# EUROPEAN PATENT SPECIFICATION

(11) **EP 3 400 089 B1**
(45) Date of publication and mention of the grant of the patent: **17.08.2022**
(21) Application number: 17736442.9
(22) Date of filing: 06.01.2017
(51) Int. Cl.: B01D 53/52, C10G 29/20, C09K 8/532, E21B 43/16, E21B 43/22

(54) **MULTIFUNCTIONAL PRODUCT WITH HYDROGEN SULFIDE SCAVENGING AND HYDRATE INHIBITION CAPACITY**
MULTIFUNKTIONSPRODUKT MIT WASSERSTOFFSULFIDFANG- UND HYDRATHEMMUNGSFÄHIGKEIT
PRODUIT MULTIFONCTIONNEL AYANT UNE CAPACITÉ D'INHIBITION D'HYDRATE ET DE PIÉGEAGE DE SULFURE D'HYDROGÈNE

(30) Priority: 08.01.2016 US 201662276565 P
(43) Date of publication of application: 14.11.2018
(73) Proprietor: Ecolab USA Inc., St. Paul, MN 55012 (US)
(72) Inventor: BAILEY, Joseph, P., Bogota (CO); PADULA, Lilian, CEP 13010-301 Campinas Sao Paulo (BR)
(74) Representative: HGF
(86) International application number: PCT/US2017/012554
(87) International publication number: WO 2017/120485

(56) References cited:
- WO-A1-98/19980
- WO-A1-2014/100051
- WO-A1-2014/120907
- WO-A1-2014/120907
- RU-C1- 2 490 311
- US-A1- 2012 241 361
- US-A1- 2015 001 132
- HUANG J ET AL: "COMPATIBILITY OF POLY(N-VINYL-2-PYRROLIDONE) WITH POLY (VINYL FORMAL)A) AND POLY(STYRENE-CO-ACRYLONITRILE)", MAKROMOLEKULARE CHEMIE, RAPID COMMUNICATIONS, HUTHIG UND WEPF VERLAG. BASEL, CH, vol. 11, no. 12, 1 December 1990 (1990-12-01), pages 613-616, XP000214938, DOI: 10.1002/MARC.1990.030111204
- GOODWIN, MELISSA J. ET AL.: 'Problems Associated with Sour Gas in the Oilfield Industry and Their Solutions' ENERGY & FUELS, [Online] vol. 29, no. 8, 30 July 2015, pages 4667 - 4682, XP055396883 Retrieved from the Internet: <URL:http://dro.dur.ac.uk/16529/1/16529.pdf > [retrieved on 2015-07-30]
- THIEU, V. ET AL.: 'Use of low-dosage hydrate inhibitors in sour systems' SPE INTERNATIONAL SYMPOSIUM ON OILFIELD CHEMISTRY, [Online] 02 February 2005, pages 1 - 7, XP055396888 Retrieved from the Internet: <URL:https://www.onepetro.org/conference-pa per/ SPE-93450-MS> [retrieved on 2005-02-02]

## Description

### TECHNICAL FIELD

The present disclosure relates generally to chemical additives useful as inhibitors and scavengers. More particularly, the disclosure relates to mixtures of hydrate inhibitors and scavengers of sulfur-based species, namely hydrogen sulfide.

### BACKGROUND

The removal of sulfur-based species from liquid or gaseous hydrocarbon streams is a problem that has long challenged many industries. Hydrogen sulfide is a huge problem in the oil industry, particularly in the drilling, production, transportation, storage, and processing of crude oil, as well as waste water associated with crude oil. The same problems exist in the natural gas industry.

The presence of sulfur-containing compounds, such as hydrogen sulfide, can result in the deposition of sulfur containing salts, which can cause plugging and corrosion of transmission pipes, valves, regulators and other process equipment. Even flared natural gas needs to be treated to avoid acid rain generation due to SOₓ formation. Also, in the manufactured gas industry or coke making industry, coal-gas emissions containing unacceptable levels of hydrogen sulfide are commonly produced from destructive distillation of bituminous coal.

Since hydrogen sulfide has an offensive odor and natural gas containing it is called "sour" gas, treatments to lower hydrogen sulfide are termed "sweetening" processes. When a particular compound is used to remove or lower H₂S, it is generally referred to as a scavenger.

Additionally, gas hydrates can easily form during the transportation of oil and gas in pipelines when the appropriate conditions are present. Water content, low temperature, and elevated pressure are generally required for the formation of gas hydrates. The formation of gas hydrates often results in lost oil production, pipeline damage, and safety hazards to field workers. Modern oil and gas technologies commonly operate under severe conditions during the course of oil recovery and production, such as high pumping speed, high pressure in the pipelines, extended length of pipelines, and low temperature of the oil and gas flowing through the pipelines. These conditions are particularly favorable for the formation of gas hydrates, which can be particularly hazardous for oil productions offshore or for locations with cold climates.

Gas hydrates are ice-like solids that are formed from small, nonpolar molecules and water at lower temperatures and at increased pressures. Under these conditions, the water molecules can form cage-like structures around these small nonpolar molecules (typically dissolved gases such as carbon dioxide, hydrogen sulfide, methane, ethane, propane, butane and iso-butane), creating a type of host-guest interaction also known as a clathrate or clathrate hydrate. The specific architecture of this cage structure can be one of several types (called type 1, type 2, type H), depending on the identity of the guest molecules. However, once formed, these crystalline cage structures tend to settle out from the solution and accumulate into large solid masses that can travel by oil and gas transporting pipelines, and potentially block or damage the pipelines and/or related equipment. The damage resulting from a blockage can be very costly from an equipment repair standpoint, as well as from the loss of production, and finally the resultant environmental impact.

The industry uses a number of methods to prevent these blockages, such as thermodynamic hydrate inhibitors (THI), anti-agglomerant hydrate inhibitors (AAs), and kinetic hydrate inhibitors (KHIs). The amount of chemical needed to prevent blockages varies widely depending upon the type of inhibitor employed. Thermodynamic hydrate inhibitors are substances that can reduce the temperature at which the hydrates form at a given pressure and water content, and are typically used at very high concentrations (regularly dosed as high as 50% based on water content-glycol is often used in amounts as high as 100% of the weight of the produced water). Therefore, there is a substantial cost associated with the transportation and storage of large quantities of these solvents. A more costeffective alternative is the use of low dosage hydrate inhibitors (LDHIs), as they generally require a dose of less than about 2% to inhibit the nucleation or growth of gas hydrates. There are two general types of LDHIs, kinetic hydrate inhibitors and anti-agglomerants, which are both typically used at much lower concentrations. KHIs work by delaying the growth of gas hydrate crystals. They also function as anti-nucleators. In contrast, anti-agglomerants allow hydrates to form but they prevent them from agglomerating and subsequently accumulating into larger masses capable of causing plugs. The function of an anti-agglomerant is to keep hydrate particles dispersed as a fluid slurry within the hydrocarbon phase.

US2015/001132 describes scavenging compounds and compositions which are useful in applications relating to the production, transportation, storage, and separation of crude oil and natural gas. It also discloses methods of using the compounds and compositions as scavengers.

Huang J., et al, 'Compatibility of poly(n-vinyl-2-pyrrolidone) with poly(vinyl formal)A) and poly(styrene-co-acrylonitrile)', Makromolekulare Chemie, Rapid Communications, Huthig und Wepf Verlag. Basel, Ch, vol. 11, no. 12, 1 December 1990, pages 613-616, *********

WO98/19980 describes a composition for preventing or retarding the formation of gas hydrates or for reducing the tendency of gas hydrates to agglomerate, during the transport of a fluid comprising water and a hydrocarbon, through a conduit, comprising (a) a polymer or copolymer selected from a terpolymer of vinyl pyrrolidone, vinyl caprolactam and an ammonium derivative monomer having from 6 to 12 atoms, selected from the group consisting of dialkyl aminoalkyl methacrylamide, dialkyl dialkenyl ammonium halide and a dialkylamino alkyl acrylate or methacrylate, a copolymer of vinyl pyrrolidone and vinylcaprolactam, and a homopolymer of vinyl caprolactam, and (b) an alcohol containing three to five carbon atoms and one hydroxy group, or a low molecular weight glycol ether containing an alkoxy group having at least 3 carbon atoms.

US2012/241361 discloses the use of neutral aqueous solutions of glyoxal (pH approximately 6 to 8.5) that scavenges H2S that is present in natural gas and in oil better than glyoxal alone or base alone. The resulting scavenger combination significantly increases the reaction rate and the overall scavenging efficiency. A buffer may be optionally used. In another embodiment, the combination of nonnitrogen-containing surfactants and glyoxal results in a significant increase in the reaction rate and the overall scavenging efficiency.

RU2490311 describes hydrogen sulfide scavengers which can be used in oil and gas production, oil and gas refining for neutralizing hydrogen sulfide and light mercaptans in hydrocarbon-containing media. The hydrogen sulfide scavenger contains an alkali metal hydroxide and/or an organic base (0.03 - 15 wt %), a nonionic surfactant (0.5 ― 25 wt%) and hemiformal(s) of a lower aliphatic alcohol (the balance). The nonionic surfactant is preferably polyethers based on glycerol, oxyalkylated glycols, oxyalkylated ethylenediamine, oxyethylated alkylphenols or mixtures thereof. The disclosed scavenger-demulsifier also has bactericidal effect on sulfate-reducing bacteria. This has the effect of intensifying processes of producing the scavenger and neutralizing hydrogen sulfide in the hydrocarbon containing media, creating a reagent with complex action, which combines the properties of a hydrogen sulfide scavenger and a demulsifier of oil-water emulsions, having low corrosiveness.

WO2014/120907 discloses scavenging compounds and compositions useful in application relating to the production, transportation, storage, and separation of crude oil and natural gas. Also disclosed herein are methods of using the compounds and compositions as scavengers, particularly in applications relating to the production, transportation, storage and separation of crude oil an

### SUMMARY

The present invention is a method of scavenging hydrogen sulfide and preventing the formation of hydrates in a medium according to claim 1. In another aspect, the present invention is a multifunctional composition for scavenging hydrogen sulfide and preventing the formation of hydrates in a medium according to claim 5. In another aspect, the present invention is a use of a multifunctional composition for scavenging hydrogen sulfide and preventing the formation of hydrates in a medium according to claim 11.

Additional features and advantages of the disclosure will be described hereinafter that form the subject of the dependent claims of this application. It should be appreciated by those skilled in the art that the conception and the specific embodiments disclosed may be readily utilized as a basis for modifying or designing other embodiments for carrying out the same purposes of the present disclosure. It should also be realized by those skilled in the art that such equivalent embodiments do not depart from the scope of the invention as set forth in the appended claims.

### BRIEF SUMMARY OF DRAWING FIGURES

FIG. 1 depicts an H₂S scavenging profile of aspects of the presently disclosed multifunctional composition and a commercial product.
FIG. 2 depicts the hydrate inhibition aspects of certain embodiments of the presently disclosed multifunctional compositions.

### DETAILED DESCRIPTION

Various embodiments are described below. The relationship and functioning of the various elements of the embodiments may better be understood by reference to the following detailed description. However, embodiments are not limited to those explicitly disclosed in the detailed description.

The present disclosure relates to mixtures of compounds that are capable of scavenging hydrogen sulfide in addition to preventing the formation of hydrates in gas, oil, and water. Methods of using such mixtures are also disclosed. Throughout the present disclosure, the compounds and compositions capable of functioning as hydrate inhibitors and hydrogen sulfide scavengers may be referred to as "multifunctional compositions". The multifunctional compositions are particularly useful in controlling hydrogen sulfide emissions from crude oil based, natural gas based, and coal based products and processes. The multifunctional compositions are applicable to both upstream and downstream processes. The multifunctional compositions, optionally blended with non-aqueous solvents, are useful in a wide range of climates and under a wide range of process conditions.

Additionally, as previously noted, the multifunctional compositions function as low dosage hydrate inhibitors that can inhibit the formation of hydrates. The multifunctional compositions may be used for inhibiting, retarding, mitigating, reducing, controlling and/or delaying formation of hydrocarbon hydrates, agglomerants of hydrates, and/or plugs. In one embodiment, the multifunctional compositions may be applied to prevent, reduce, and/or mitigate plugging of conduits, pipes, transfer lines, valves, and other places or equipment where hydrocarbon hydrate solids may form.

The presently disclosed multifunctional compositions have numerous benefits over prior art compositions. For example, the multifunctional composition provides flexibility to the user and allows for injection at numerous locations, such as into an oil or gas well via, for example, the gas lift or capillary / umbilical tubing. Additionally, use of the multifunctional composition will allow the user to significantly reduce the amount of thermodynamic hydrate inhibitor (ethanol) normally used by about 75% - 90%. Further, by combining a hydrate inhibitor and a hydrogen sulfide scavenger into a single multifunctional composition, a single injection point can be used to inject the multifunctional composition into the well. By using a single, multifunctional composition, shipping costs can be reduced and the amount of chemicals that need to be stored on site can be reduced.

In certain embodiments, the multifunctional compositions may be in anhydrous form, thereby allowing use in processes where it is desirable to minimize water content (e.g., in an oil production process). Producing the multifunctional compositions in anhydrous form further reduces shipping and transportation costs. The anhydrous multifunctional compositions can optionally be blended with hydrophilic solvents (e.g., alcohols, glycol, polyols) for non-aqueous applications. In some embodiments, the multifunctional compositions may considerably lower the water washable nitrogen content to eliminate nitrogen contamination of refinery catalyst beds. In some embodiments, the multifunctional compositions exclude nitrogen-containing compounds. The presently disclosed multifunctional compositions are thermally stable up to about 50 °C for about 7 days.

The multifunctional compositions of the present disclosure may comprise multiple components and/or multiple compounds. In some embodiments, the multifunctional composition comprises at least two components. The multifunctional composition comprises a hydrogen sulfide scavenger compound and a hydrate inhibitor compound. In certain embodiments, the multifunctional composition comprises at least three components. For example, the multifunctional composition may comprise a hydrate inhibitor compound, a hydrogen sulfide scavenger compound, and a pH adjustment compound, such as an acid or a base. In other embodiments, the multifunctional composition may comprise a hydrate inhibitor compound, a hydrogen sulfide scavenger compound, a pH adjustment compound, and a solvent. The multifunctional compound may also comprise more than one of the listed components. For example, the multifunctional composition may comprise more than one hydrogen sulfide scavenger, more than one hydrate inhibitor, more than one solvent, and/or more than one pH adjustment compound.

The amount of hydrogen sulfide scavenger in the multifunctional composition is not particularly limited. In some embodiments, the multifunctional composition may comprise from about 10% to about 97%, by weight, of the hydrogen sulfide scavenger. For example, the multifunctional composition may comprise from about 50% to about 90%, by weight, or from about 85% to about 97%, by weight, of the hydrogen sulfide scavenger.

The amount of hydrate inhibitor compound in the multifunctional composition is not particularly limited. In some embodiments, the multifunctional composition may comprise from about 1% to about 70%, by weight, of the hydrate inhibitor compound. For example, the multifunctional composition may comprise from about 2% to about 20%, by weight, or from about 2% to about 8%, by weight, of the hydrate inhibitor compound.

In some embodiments, the multifunctional composition comprises from about 50% to about 97%, by weight, of the hydrogen sulfide scavenger and from about 50% to about 3%, by weight, of the hydrate inhibitor compound.

The amount of solvent in the multifunctional composition is not particularly limited. In some embodiments, the multifunctional composition may not comprise a solvent. In certain embodiments, the multifunctional composition may comprise from about 0% to about 70%, by weight, of the solvent. For example, the multifunctional composition may comprise from about 0% to about 20%, by weight, or from about 5% to about 10%, by weight, of the solvent.

The amount of pH adjustment compound in the multifunctional composition is not particularly limited, In some embodiments, the multifunctional composition may not comprise a pH adjustment compound. In certain embodiments, the multifunctional composition may comprise from about 0% to about 5%, by weight, of the pH adjustment compound or from about 0% to about 1 %, by weight, of the pH adjustment compound.

The hydrogen sulfide scavenger compound may comprise an acetal and/or hemiacetal. The acetal or hemiacetal may be cyclic wherein the two oxygen atoms are incorporated into the ring structure. Illustrative, non-limiting examples include ethylene glycol formal and glycerol formal. Exemplary chemical structures are as follows: 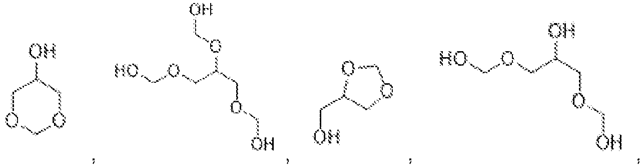 and 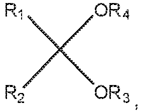 wherein R₁ comprises hydrogen (H) or a hydrocarbon group with 1 to 5 carbon atoms, R₂ comprises H or a hydrocarbon group with 1 to 5 carbon atoms, R₃ may be selected from a hydrocarbon group with 1 to 5 carbon atoms, and R₄ comprises H or a hydrocarbon group with 1 to 5 carbon atoms.

In some embodiments, the hydrogen sulfide scavenger does not comprise nitrogen. In some embodiments, the hydrogen sulfide scavenger is not branched. In other embodiments, the hydrogen sulfide scavenger is branched. In certain embodiments, the hydrogen sulfide scavenger is aliphatic.

In some embodiments, the hydrogen sulfide scavenger compound comprises a dialdehyde. In certain embodiments, the dialdehyde comprises the following generic structure: 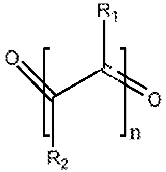 wherein R₁ comprises hydrogen (H), R₂ comprises H, and n is the number 1 or a number greater than 1. The hydrogen sulfide scavenger compound may comprise oligomers of the foregoing dialdehydes, such as oligomers of the hydrated species, e.g.,

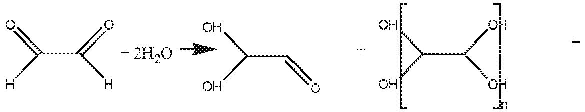

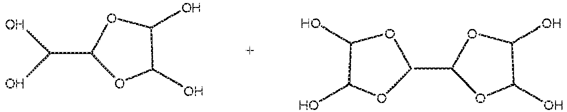

In some embodiments, the hydrogen sulfide scavenger may comprise a cyclic structure. The cyclic structure may comprise one or more heteroatoms, including, but not limited to, nitrogen. The heteroatom may be an alkyl substituted alkylamine, for example. In some embodiments, the cyclic structure may comprise the following general formula: 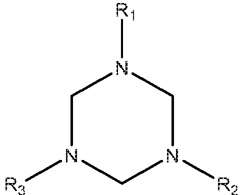 wherein R₁ may be selected from a hydrogen (H), a hydrocarbon group with 1 to 5 carbon atoms, or an alcohol group containing 1 or 2 carbon atoms; R₂ may be selected from hydrogen (H), a hydrocarbon group with 1 to 5 carbon atoms, or an alcohol group containing 1 or 2 carbon atoms, and; R₃ may be selected from hydrogen (H), a hydrocarbon group with 1 to 5 carbon atoms, or an alcohol group containing 1 or 2 carbon atoms.

In some embodiments, the hydrate inhibitor compound comprises one or more compounds selected from the group consisting of N-vinyl-2-caprolactam, vinyl-2-pyrrolidone, and any combination thereof. The hydrate inhibitor may comprise branched or linear polymers comprising acyclic and/or cyclic nitrogen and ketone functionalities, such as poly-N-vinyl-2-caprolactam.

Exemplary chemical structures for the hydrate inhibitor comprise, but are not limited to: 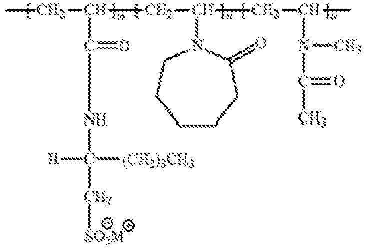 and 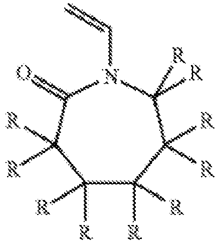 wherein R is independently selected from the group consisting of hydrogen, functionalized and unfunctionalized alkyl, cycloalkyl, and aryl groups, wherein any of the aforementioned groups may be present with or without one or more heteroatoms. The symbol "m" may be a number from about 1 to about 60, such as about 1 to about 36 or about 1 to about 18, "n" may be a number from about 1 to about 60, such as about 1 to about 36 or about 1 to about 18, "ο" may be a number from about 1 to about 60, such as about 1 to about 36 or about 1 to about 18 and "M" may be selected from H, Na, K, Li, Ca, Ba, Mg2+, AI3+, and NH₄+, for example.

The hydrate inhibitor may also comprise the following chemical structure: 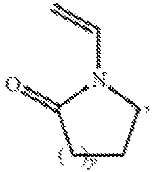 wherein "y" can be 1 .

In some embodiments, the hydrate inhibitor compound does not comprise nitrogen. In some embodiments, the hydrate inhibitor compound is not branched. In certain embodiments, the hydrate inhibitor compound is aliphatic.

Any solvent may be used in connection with the multifunctional composition. In some embodiments, the solvent does not comprise water. In certain embodiments, the solvent is a polar solvent, such as an alcohol. For example, the solvent may comprise methanol, ethanol, glycol, or any other alcohol or combination of alcoholic solvents. Other suitable solvents include, but are not limited to, hydrocarbon solvents such as naphta, xylene or toluene, oxygenated solvents, and water.

The pH adjustment compound comprises any compound that can adjust the pH of the multifunctional composition. For example, the pH adjustment compound may comprise any acid or any base. Illustrative, non-limiting examples of bases include potassium hydroxide and sodium hydroxide. Illustrative, non-limiting examples of acids include organic acids, such as acetic acid. The acids or bases can be used to adjust the pH of the multifunctional composition to any desired pH. For example, in some embodiments, the pH adjustment compound may be added to the multifunctional composition to give the multifunctional composition a pH between about 5.5 and about 8. In other embodiments, the multifunctional composition may comprise a pH between about 4.5 and about 9.

While the multifunctional compositions may generally comprise any of the components listed herein in any of the proportions listed herein, the following illustrates certain non-limiting, illustrative examples. In one embodiment, the multifunctional composition comprises, by weight, about 85%-90% 1,2-ethanediylbis(oxy)bismethanol, about 2%-8% 1-ethenylazepan-2-one-1-ethenylpyrrolidin-2-one (1:1 being the ratio of pyrrolidinone to ethenylazepan), about 5%-10% ethanol, and about 0%-1% acetic acid. In another embodiment, the multifunctional composition comprises, by weight, about 89% 1,2-ethanediylbis(oxy)bismethanol, about 8% ethanol, about .2% acetic acid, and about 3% 1-ethenylazepan-2-one-1-ethenylpyrrolidin-2-one (1:1). In an additional embodiment, the multifunctional composition comprises, by weight, about 86% 1,2-ethanediylbis(oxy)bismethanol, about 8% ethanol, about .2% acetic acid, and about 6% 1-ethenylazepan-2-one-1-ethenylpyrrolidin-2-one (1:1). In a further embodiment, the multifunctional composition comprises, by weight, about 85% 1,2-ethanediylbis(oxy)bismethanol, about 8% ethanol, about .2% acetic acid, and about 7% 1-ethenylazepan-2-one-1-ethenylpyrrolidin-2-one (1:1).

As is further discussed in the examples of the present application, the present inventors unexpectedly discovered that the presently disclosed multifunctional composition has superior hydrate inhibition capabilities as compared to using the hydrate inhibitor compound by itself. Thus, the inventors discovered unexpected synergism between the hydrate inhibitor compound and the other components of the multifunctional composition. In some embodiments, it was found that the hydrogen sulfide scavengers had a positive, synergistic effect on the hydrate inhibitors. Without wishing to be bound by theory, in some embodiments, it may be possible that the acetal and hemicetal groups of the scavengers are responsible for the synergy.

The multifunctional compositions of the present disclosure can optionally include one or more additives. Suitable additives include, but are not limited to, asphaltene inhibitors, paraffin inhibitors, corrosion inhibitors, scale inhibitors, emulsifiers, water clarifiers, dispersants, emulsion breakers, additional hydrogen sulfide scavengers, biocides, additional pH modifiers, surfactants, additional solvents, additional inhibitors, such as thermodynamic hydrate inhibitors, kinetic hydrate inhibitors, and/or gas hydrate inhibitors, anti-agglomerants, and any combination thereof.

Suitable asphaltene inhibitors include, but are not limited to, aliphatic sulphonic acids; alkyl aryl sulphonic acids; aryl sulfonates; lignosulfonates; alkylphenol/aldehyde resins and similar sulfonated resins; polyolefin esters; polyolefin imides; polyolefin esters with alkyl, alkylenephenyl or alkylenepyridyl functional groups; polyolefin amides; polyolefin amides with alkyl, alkylenephenyl or alkylenepyridyl functional groups; polyolefin imides with alkyl, alkylenephenyl or alkylenepyridyl functional groups; alkenyl/vinyl pyrrolidone copolymers; graft polymers of polyolefins with maleic anhydride or vinyl imidazole; hyperbranched polyester amides; polyalkoxylated asphaltenes, amphoteric fatty acids, salts of alkyl succinates, sorbitan monooleate, polyisobutylene succinic anhydride, and combinations thereof.

Suitable paraffin inhibitors include, but are not limited to, paraffin crystal modifiers, and dispersant/crystal modifier combinations. Suitable paraffin crystal modifiers include, but are not limited to, alkyl acrylate copolymers, alkyl acrylate vinylpyridine copolymers, ethylene vinyl acetate copolymers, maleic anhydride ester copolymers, branched polyethylenes, naphthalene, anthracene, microcrystalline wax and/or asphaltenes, and combinations thereof.

Suitable corrosion inhibitors include, but are not limited to, amidoamines, quaternary amines, amides, phosphate esters, and combinations thereof.

Suitable scale inhibitors include, but are not limited to, phosphates, phosphate esters, phosphoric acids, phosphonates, phosphonic acids, polyacrylamides, salts of acrylamido-methyl propane sulfonate/acrylic acid copolymer (AMPS/AA), phosphinated maleic copolymer (PHOS/MA), salts of a polymaleic acid/acrylic acid/acrylamido-methyl propane sulfonate terpolymer (PMA/AMPS), and combinations thereof.

Suitable emulsifiers include, but are not limited to, salts of carboxylic acids, products of acylation reactions between carboxylic acids or carboxylic anhydrides and amines, alkyl, acyl and amide derivatives of saccharides (alkyl-saccharide emulsifiers), and combinations thereof.

Suitable water clarifiers include, but are not limited to, inorganic metal salts such as alum, aluminum chloride, and aluminum chlorohydrate, or organic polymers such as acrylic acid based polymers, acrylamide based polymers, polymerized amines, alkanolamines, thiocarbamates, cationic polymers such as diallyldimethylammonium chloride(DADMAC), and combinations thereof.

Suitable dispersants include, but are not limited to, aliphatic phosphonic acids with 2-50 carbons, such as hydroxyethyl diphosphonic acid, and aminoalkyl phosphonic acids, e.g. polyaminomethylene phosphonates with 2-10 N atoms e.g. each bearing at least one methylene phosphonic acid group; examples of the latter are ethylenediamine tetra(methylene phosphonate), diethylenetriamine penta(methylene phosphonate) and the triamine- and tetramine-polymethylene phosphonates with 2-4 methylene groups between each N atom, at least 2 of the numbers of methylene groups in each phosphonate being different. Other suitable dispersants include lignin or derivatives of lignin such as lignosulfonate and naphthalene sulfonic acid and derivatives, and combinations thereof. Suitable dispersants also include dodecyl benzene sulfonate, oxyalkylated alkylphenols, oxyalkylated alkylpnenolic resins, and combinations thereof.

Suitable emulsion breakers include, but are not limited to, dodecylbenzylsulfonic acid (DDBSA), the sodium salt of xylenesulfonic acid (NAXSA), epoxylated and propoxylated compounds, anionic cationic and nonionic surfactants, resins such as phenolic and epoxide resins, and combinations thereof.

Suitable additional hydrogen sulfide scavengers include, but are not limited to, oxidants (e.g., inorganic peroxides such as sodium peroxide, or chlorine dioxide), aldehydes (e.g., of 1-10 carbons such as formaldehyde or glutaraldehyde or (meth)acrolein), triazines (e.g., monoethanol amine triazine, monomethylamine triazine, and triazines from multiple amines or mixtures thereof), glyoxal, and combinations thereof.

Suitable additional hydrate inhibitors include, but are not limited to, thermodynamic hydrate inhibitors (THI), kinetic hydrate inhibitors (KHI), anti-agglomerates (AA), and combinations thereof. Suitable thermodynamic hydrate inhibitors include, but are not limited to, NaCl salt, KCI salt, CaCl₂ salt, MgCl₂ salt, NaBr₂ salt, formate brines (e.g. potassium formate), polyols (such as glucose, sucrose, fructose, maltose, lactose, gluconate, monoethylene glycol, diethylene glycol, triethylene glycol, mono-propylene glycol, dipropylene glycol, tripropylene glycols, tetrapropylene glycol, monobutylene glycol, dibutylene glycol, tributylene glycol, glycerol, diglycerol, triglycerol, and sugar alcohols (e.g. sorbitol, mannitol)), methanol, propanol, ethanol, glycol ethers (such as diethyleneglycol monomethylether, ethyleneglycol monobutylether), alkyl or cyclic esters of alcohols (such as ethyl lactate, butyl lactate, methylethyl benzoate), and combinations thereof. Suitable kinetic hydrate inhibitors and anti-agglomerates include, but are not limited to, polymers and copolymers, polysaccharides (such as hydroxyethylcellulose (HEC), carboxymethylcellulose (CMC), starch, starch derivatives, and xanthan), lactams (such as polyvinylcaprolactam, polyvinyl lactam), pyrrolidones (such as polyvinyl pyrrolidone of various molecular weights), surfactants (such as fatty acid salts, ethoxylated alcohols, propoxylated alcohols, sorbitan esters, ethoxylated sorbitan esters, polyglycerol esters of fatty acids, alkyl glucosides, alkyl polyglucosides, alkyl sulfates, alkyl sulfonates, alkyl ester sulfonates, alkyl aromatic sulfonates, alkyl betaine, alkyl amido betaines), hydrocarbon based dispersants (such as lignosulfonates, iminodisuccinates, polyaspartates), amino acids, proteins, and combinations thereof.

Suitable biocides include, but are not limited to, oxidizing and non-oxidizing biocides. Suitable non-oxidizing biocides include, for example, aldehydes (e.g., formaldehyde, glutaraldehyde, and acrolein), amine-type compounds (e.g., quaternary amine compounds and cocodiamine), halogenated compounds (e.g., bronopol and 2-2-dibromo-3-nitrilopropionamide (DBNPA)), sulfur compounds (e.g., isothiazolone, carbamates, and metronidazole), quaternary phosphonium salts (e.g., tetrakis(hydroxymethyl)phosphonium sulfate (THPS)), and combinations thereof. Suitable oxidizing biocides include, for example, sodium hypochlorite, trichloroisocyanuric acids, dichloroisocyanuric acid, calcium hypochlorite, lithium hypochlorite, chlorinated hydantoins, stabilized sodium hypobromite, activated sodium bromide, brominated hydantoins, chlorine dioxide, ozone, peroxides, and combinations thereof.

Suitable additional pH modifiers include, but are not limited to, alkali hydroxides, alkali carbonates, alkali bicarbonates, alkaline earth metal hydroxides, alkaline earth metal carbonates, alkaline earth metal bicarbonates and mixtures or combinations thereof. Exemplary pH modifiers include NaOH, KOH, Ca(OH)₂, CaO, Na₂CO₃, KHCO₃, K₂CO₃, NaHCO₃, MgO, and Mg(OH)₂.

Suitable surfactants include, but are not limited to, anionic surfactants, cationic surfactants, nonionic surfactants, and combinations thereof. Anionic surfactants include alkyl aryl sulfonates, olefin sulfonates, paraffin sulfonates, alcohol sulfates, alcohol ether sulfates, alkyl carboxylates and alkyl ether carboxylates, and alkyl and ethoxylated alkyl phosphate esters, and mono and dialkyl sulfosuccinates and sulfosuccinamates, and combinations thereof. Cationic surfactants include alkyl trimethyl quaternary ammonium salts, alkyl dimethyl benzyl quaternary ammonium salts, dialkyl dimethyl quaternary ammonium salts, imidazolinium salts, and combinations thereof. Nonionic surfactants include alcohol alkoxylates, alkylphenol alkoxylates, block copolymers of ethylene, propylene and butylene oxides, alkyl dimethyl amine oxides, alkyl-bis(2-hydroxyethyl) amine oxides, alkyl amidopropyl dimethyl amine oxides, alkylamidopropyl-bis(2-hydroxyethyl) amine oxides, alkyl polyglucosides, polyalkoxylated glycerides, sorbitan esters and polyalkoxylated sorbitan esters, and alkoyl polyethylene glycol esters and diesters, and combinations thereof. Also included are betaines and sultanes, amphoteric surfactants such as alkyl amphoacetates and amphodiacetates, alkyl amphopropripionates and amphodipropionates, alkyliminodiproprionate, and combinations thereof.

In certain embodiments, the surfactant may be a quaternary ammonium compound, an amine oxide, an ionic or non-ionic surfactant, or any combination thereof. Suitable quaternary amine compounds include, but are not limited to, alkyl benzyl ammonium chloride, benzyl cocoalkyl(C₁₂-C₁₈)dimethylammonium chloride, dicocoalkyl (C₁₂-C₁₈)dimethylammonium chloride, ditallow dimethylammonium chloride, di(hydrogenated tallow alkyl)dimethyl quaternary ammonium methyl chloride, methyl bis(2-hydroxyethyl cocoalkyl(C₁₂-C₁₈) quaternary ammonium chloride, dimethyl(2-ethyl) tallow ammonium methyl sulfate, n-dodecylbenzyldimethylammonium chloride, n-octadecylbenzyldimethyl ammonium chloride, n-dodecyltrimethylammonium sulfate, soya alkyltrimethylammonium chloride, and hydrogenated tallow alkyl (2-ethylhyexyl) dimethyl quaternary ammonium methyl sulfate.

The multifunctional compositions of the present disclosure may be used for sweetening a gas or liquid, such as a sour gas or a sour liquid. The compositions may be used for scavenging hydrogen sulfide from a gas or liquid stream, in addition to inhibiting the formation of hydrates, by treating said stream with an effective amount of the composition. In some embodiments, the effective amount of the composition added to the medium may be from about 0.5% to about 90%, such as from about 1% to about 10% or from about 3% to about 7% of the multifunctional composition, based on water, such as produced water.

The compositions of the disclosure can be used in any industry where it is desirable to capture hydrogen sulfide from a gas or liquid stream, in addition to inhibit the formation of hydrates. In certain embodiments, the compositions can be used in water systems, condensate/oil systems/gas systems, or any combination thereof. In certain embodiments, the compositions can be applied to a gas or liquid produced or used in the production, transportation, storage, and/or separation of crude oil or natural gas. In certain embodiments, the compositions can be applied to a gas stream used or produced in a coal-fired process, such as a coal-fired power plant. In certain embodiments, the compositions can be applied to a gas or liquid produced or used in a waste-water process, a farm, a slaughter house, a land-fill, a municipality waste-water plant, a coking coal process, or a biofuel process.

The multifunctional compositions may be added to any fluid or gas containing hydrogen sulfide, a mercaptan, or compounds capable of forming hydrates, or the compositions may be added to a fluid or gas that may be exposed to hydrogen sulfide and/or a mercaptan. A fluid to which the compositions may be introduced may be an aqueous medium. The aqueous medium may comprise water, gas, and optionally liquid hydrocarbon. A fluid to which the compositions may be introduced may be a liquid hydrocarbon. The liquid hydrocarbon may be any type of liquid hydrocarbon including, but not limited to, crude oil, heavy oil, processed residual oil, bitminous oil, coker oils, coker gas oils, fluid catalytic cracker feeds, gas oil, naphtha, fluid catalytic cracking slurry, diesel fuel, fuel oil, jet fuel, gasoline, and kerosene. In certain embodiments, the gas may be a sour gas. In certain embodiments, the fluid or gas may be a refined hydrocarbon product.

A fluid or gas treated with a composition of the present disclosure may be at any selected temperature, such as ambient temperature or an elevated temperature. In certain embodiments, the fluid (e.g., liquid hydrocarbon) or gas may be at a temperature of from about 40 °C to about 250 °C. In certain embodiments, the fluid or gas may be at a temperature of from -50 °C to 300 °C, 0 °C to 200 °C, 10 °C to 100 °C, or 20 °C to 90 °C. In certain embodiments, the fluid or gas may be at a temperature of 22 °C, 23 °C, 24 °C, 25°C, 26 °C, 27 °C, 28 °C, 29 °C, 30 °C, 31 °C, 32 °C, 33 °C, 34 °C, 35 °C, 36 °C, 37 °C, 38 °C, 39 °C, or 40 °C. In certain embodiments, the fluid or gas may be at a temperature of 85 °C, 86 °C, 87 °C, 88 °C, 89 °C, 90 °C, 91 °C, 92 °C, 93 °C, 94 °C, 95 °C, 96 °C, 97 °C, 98 °C, 99 °C, or 100 °C.

The compositions of the invention may be added to a fluid at various levels of water cut. For example, the water cut may be from 0% to 100% volume/volume (v/v), from 1% to 80% v/v, or from 1% to 60% v/v. The fluid can be an aqueous medium that contains various levels of salinity. In one embodiment, the fluid may have a salinity of 0% to 75%, about 1% to 50%, or about 10% to 25% weight/weight (w/w) total dissolved solids (TDS).

The fluid or gas in which the compositions of the disclosure are introduced may be contained in and/or exposed to many different types of apparatuses. For example, the fluid or gas may be contained in an apparatus that transports fluid or gas from one point to another, such as an oil and/or gas pipeline. In certain embodiments, the apparatus may be part of an oil and/or gas refinery, such as a pipeline, a separation vessel, a dehydration unit, or a gas line. The fluid may be contained in and/or exposed to an apparatus used in oil extraction and/or production, such as a wellhead. The apparatus may be part of a coal-fired power plant. The apparatus may be a scrubber (e.g., a wet flue gas desulfurizer, a spray dry absorber, a dry sorbent injector, a spray tower, a contact or bubble tower, or the like). The apparatus may be a cargo vessel, a storage vessel, a holding tank, or a pipeline connecting the tanks, vessels, or processing units. In certain embodiments, the fluid or gas may be contained in water systems, condensate/oil systems/gas systems, or any combination thereof.

The compositions may be introduced into a fluid or gas by any appropriate method for ensuring dispersal of the scavenger through the fluid or gas. The compositions may be injected using mechanical equipment such as chemical injection pumps, piping tees, injection fittings, atomizers, quills, and the like. The compositions may be introduced with or without one or more additional polar or nonpolar solvents, depending upon the application and requirements. In certain embodiments, the compositions may be pumped into an oil and/or gas pipeline using an umbilical line. In certain embodiments, capillary injection systems can be used to deliver the compositions to a selected fluid. In some embodiments, the compositions can be introduced into a liquid and mixed or the compositions can be injected into a gas stream as an aqueous or nonaqueous solution, mixture, or slurry. In certain embodiments, the fluid or gas may be passed through an absorption tower comprising a composition of the present disclosure.

The multifunctional compositions may be applied to a fluid or gas to provide a scavenger concentration of about 1 parts per million (ppm) to about 1,000,000 ppm, about 1 parts per million (ppm) to about 100,000 ppm, about 10 ppm to about 75,000 ppm, about 100 ppm to about 45,000 ppm, about 500 ppm to about 40,000 ppm, about 1,000 ppm to about 35,000 ppm, about 3,000 ppm to about 30,000 ppm, about 4,000 ppm to about 25,000 ppm, about 5,000 ppm to about 20,000 ppm, about 6,000 ppm to about 15,000 ppm, or about 7,000 ppm to about 10,000 ppm. The compositions may be applied to a fluid at a concentration of about 100 ppm to about 2,000 ppm, about 200 ppm to about 1,500 ppm, or about 500 ppm to about 1000 ppm. Each system may have its own requirements, and a more sour gas (e.g., containing more hydrogen sulfide) may require a higher dose rate of a composition of the present disclosure.

In certain embodiments, the compositions may be applied to a fluid or gas in an equimolar amount or greater relative to hydrogen sulfide and/or mercaptans present in the fluid or gas. In certain embodiments, the compositions may be applied to a fluid or gas as a neat (i.e. without solvent) composition (e.g., the compositions may be used neat in a contact tower).

The hydrogen sulfide in a fluid or gas may be reduced by any amount by treatment with a composition of the present disclosure. The actual amount of residual hydrogen sulfide after treatment may vary depending on the starting amount. In certain embodiments, the hydrogen sulfide levels may be reduced to about 150 ppm by volume or less, as measured in the vapor phase, based on the volume of the liquid media. In certain embodiments, the hydrogen sulfide levels may be reduced to 100 ppm by volume or less, as measured in the vapor phase, based on the volume of the liquid media. In certain embodiments, the hydrogen sulfide levels may be reduced to 50 ppm by volume or less, as measured in the vapor phase, based on the volume of the liquid media. In some embodiments, the hydrogen sulfide levels may be reduced to 20 ppm by volume or less, as measured in the vapor phase, based on the volume of the liquid media. In other embodiments, the hydrogen sulfide levels may be reduced to 15 ppm by volume or less, as measured in the vapor phase, based on the volume of the liquid media. In certain embodiments, the hydrogen sulfide levels may be reduced to 10 ppm by volume or less, as measured in the vapor phase, based on the volume of the liquid media. In some embodiments, the hydrogen sulfide levels may be reduced to 5 ppm by volume or less, as measured in the vapor phase, based on the volume of the liquid media. In certain embodiments, the hydrogen sulfide levels may be reduced to 0 ppm by volume, as measured in the vapor phase, based on the volume of the liquid media.

In particular embodiments, the compositions (or certain components of the compositions) may be soluble in an aqueous phase such that the captured sulfur-based species will migrate into the aqueous phase. If an emulsion is present, the captured sulfur-based species can be migrated into the aqueous phase from a hydrocarbon phase (e.g., crude oil) and removed with the aqueous phase. If no emulsion is present, a water wash can be added to attract the captured sulfur-based species. In certain embodiments, the compositions of the invention can be added before a hydrocarbon (e.g., crude oil) is treated in a desalter, which emulsifies the hydrocarbon media with a water wash to extract water soluble contaminants and separates and removes the water phase from the hydrocarbon.

In certain embodiments, a water wash may be added in an amount suitable for forming an emulsion with a hydrocarbon. In certain embodiments, the wash water may be added in an amount of from about 1 to about 50 percent by volume based on the volume of the emulsion. In certain embodiments, the wash water may be added in an amount of from about 1 to about 25 percent by volume based on the volume of the emulsion. In certain embodiments, the amount of hydrocarbon may be present in an amount of from about 50 to about 99 percent by volume based on the volume of the emulsion.

The wash water and hydrocarbon may be emulsified by any conventional manner. In certain embodiments, the wash water and hydrocarbon may be heated and thoroughly mixed to produce an oil-in-water emulsion. In certain embodiments, the wash water and hydrocarbon may be heated at a temperature in a range of from about 90 °C to about 150 °C. The wash water and hydrocarbon may be mixed in any conventional manner, such as an in-line static mixer or an in-line mix valve with a pressure drop of about 0.2 to about 2 bar depending on the density of the hydrocarbon. The emulsion may be allowed to separate, such as by settling, into an aqueous phase and an oil phase. In certain embodiments, the aqueous phase may be removed. In another embodiment, the aqueous phase may be removed by draining the aqueous phase.

Optionally, demulsifiers may be added to aid in separating water from the hydrocarbon. In certain embodiments, the demulsifiers include, but are not limited to, oxyalkylated organic compounds, anionic surfactants, nonionic surfactants or mixtures of these materials. The oxyalkylated organic compounds include, but are not limited to, phenolformaldehyde resin ethoxylates and alkoxylated polyols. The anionic surfactants include alkyl or aryl sulfonates, such as dodecylbenzenesulfonate. These demulsifiers may be added in amounts to contact the water from about 1 to about 1000 ppm by weight based on the weight of the hydrocarbon.

The compounds, compositions, methods, and processes of the invention will be better understood by reference to the following examples, which are intended as an illustration of and not a limitation upon the scope of the invention.

### Example 1

The objective of example 1 was to determine the hydrogen sulfide efficacy of certain aspects of the presently disclosed multifunctional compositions. The experiment was run using a Dynamic H₂S Scavenger Analyzer. The analyzer included an autoclave reactor connected to a gas chromatograph allowing the use of multiphasic mixtures (gas, oil, and water) under pressures up to 10 bar and temperatures up to 200 °C using the gas chromatograph, the concentration of hydrogen sulfide was determined every 2 minutes.

In this particular example, the experimental conditions were as follows: Temperature: about 70 °C
Pressure: about 1.03 MPa (150 psi)
Gas Composition: about 0.2% H₂S, CO₂ as the balance gas
Gas Flow Rate: about 600 mL/min
Synthetic Brine: about 35,000 ppm of NaCl
Organic Phase: Kerosene
Water Cut: about 70%
Rotation Speed: about 500 rpm
Duration: H₂S scavenging capacity within (up to) 1 hour of product injection Sample: about 1000 ppm of product

The pressure reactor had a total volume of 1000 mL, but only about 700 mL of liquids were inside the autoclave. It had a cover plate with an opening that is used to introduce a pH electrode and other openings for a metallic condenser, a high pressure injection syringe, and a stirrer.

A volume of about 700 mL liquid phase was added to the autoclave. The liquid comprised kerosene and brine (about 35g/L of NaCl). The system was submitted to a constant stream of a gaseous mixture containing H₂S under a certain pressure and temperature. The gas flow rate was about 600 mL/min and the gaseous mixture was purged directly into the liquids. The liquid phase was constantly homogenized by a mixer at about 500 rpm so that the reaction medium was saturated with H₂S and CO₂. The concentration of H₂S in the stream was continuously measured by gas chromatography with a thermal conductivity detector.

After saturation of the medium with the gaseous mixture, an aliquot of the product to be tested was introduced into the autoclave. The tested concentration was standardized in about 1000 ppm of product. The H₂S mass that the tested product was able to capture (or reduce) was calculated from the variation in H₂S concentration obtained in the graph of H₂S concentration % mol/mol vs. time. The volume of scavenger per mass of H₂S consumed (L of scavenger/kg H₂S) is employed as a parameter to compare the performance of different H₂S scavengers. That parameter is calculated up to 60 minutes of reaction.

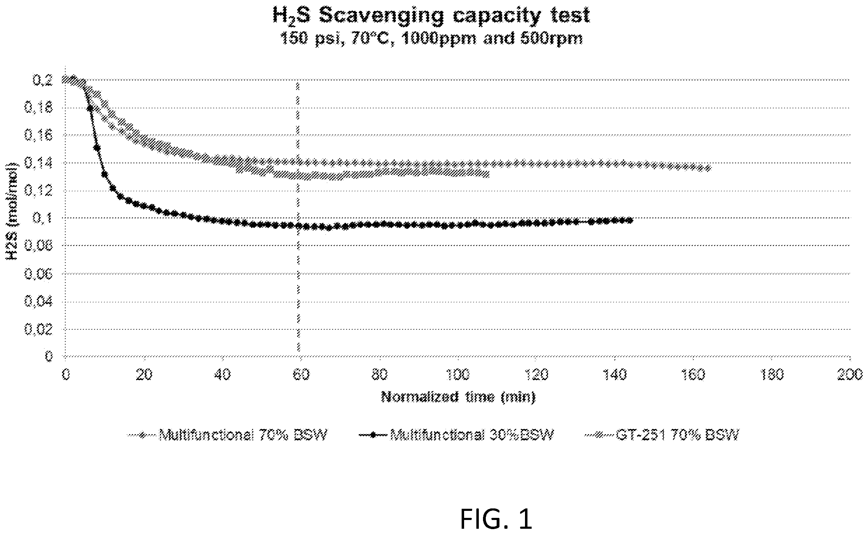

It was decided to evaluate the performance of certain multifunctional compositions at pressures of about 1.03 MPa (150 psi) using a mixture of kerosene and brine as the liquid. FIG. 1 and Table 1 provide data from this experiment using Inventive Mixture 1 (which is an inventive mixture comprising 1,2-ethanediylbis (oxy) bis methanol (about 85% by weight), 1-ethenylazepan-2-one-1-ethenylpyrrolidin-2-one (1:1) (about 7% by weight), ethanol (about 8% by weight), and acetic acid (about 0.2% by weight) and Scavenger A. In FIG. 1, "Multifunctional 70% BSW" refers to Inventive Mixture 1 with 70% oil / 30% water, "Multifunctional 30% BSW' refers to Inventive Mixture 1 with 30% oil / 70% water, and "GT-251 70% BSW" refers to Commercial Product 1, which is Scavenger A (a mixture of glycolformal (about 90% by weight) and ethanol (about 10% by weight).

**Table 1: H₂S scavenging capacity of Inventive Mixture 1 & Commercial Product 1**

| Scavenging Capacity Until 60 min | | |
|---|---|---|
| Product | Volume of product/mass of H₂S (L/kg) | Mass of H₂S/vol. of Product (g/L) |
| Commercial Product 1 - 70% oil / 30% water | 23.8 | 42.02 |
| Inventive Mixture 1 - 70% oil / 30% water | 28.5 | 35.14 |
| Inventive Mixture 1 - 30% oil / 70% water | 14.7 | 68.17 |

The results show that the hydrogen sulfide scavenging capacity of the multifunctional composition is not negatively impacted by the presence of the hydrate inhibitor.

### Example 2

In an additional experiment, the hydrate inhibition aspects of certain embodiments of the presently disclosed multifunctional compositions were analyzed. Gas hydrates are ice-like crystalline structures that form during conditions of high pressure and low temperature. In order to determine if the multifunctional compositions were able to inhibit hydrate formation, the Autoclave Crystal Growth Inhibition procedure (DLI 10.228 "Operation of high-pressure autoclaves for hydrate inhibitor evaluation") was used.

In order to run the tests, a gas composition was used and the hydrates equilibrium curve was obtained to define the tests parameters. The procedure includes a system containing deionized water and a gas known to form hydrates inside the autoclave. The autoclave was closed and pressurized up to about 60 bar at about 25 °C. The pressure was kept constant and the system was cooled to a temperature of about 1 °C while stopping at different temperatures while cooling to see if the system was at the hydrate equilibrium temperature. While cooling, there is a significant pressure decrease, which is due to gas being trapped in the crystal due to hydrate formation. Subsequently, the system is heated to about 25 °C again and then the cooling cycle is repeated. This sequence of steps was performed 12 times to determine if the temperature that hydrates form is consistent when repeating the same procedure.

The data points obtained with this procedure are the hydrate equilibrium temperature, isochoric pressure, and pressure difference when hydrates form. With these parameters, it is possible to calculate using, for example, HydraFlash, the hydrate growth rate and to determine if it is above the rapid growth region (RGR) boundary. The RGR boundary gives a quantitative indication of the kinetic hydrate inhibitor to act as an inhibitor. The threshold is 5wt.-%/h, so the growth rate is calculated at different test temperatures. Crossing the threshold of 5wt.-%/h indicates that the RGR has been crossed, which indicates that the inhibitor is no longer efficient to inhibit crystal growth.

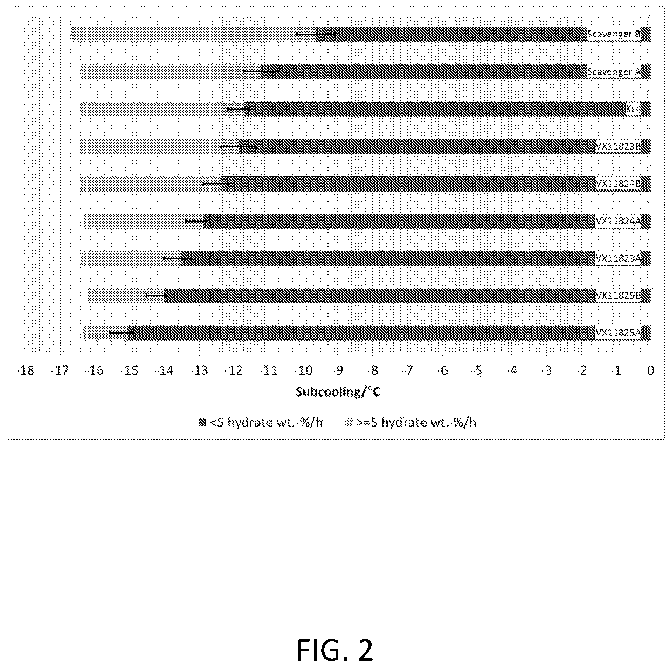

When viewing the data, "subcooling" refers to the difference between the hydrate equilibrium temperature and the tested temperature. In FIG. 2, the lighter shaded portion of the horizontal bar is the region where hydrates form and the darker shaded portion of the bar is the region below the threshold. A larger difference indicates better hydrate formation inhibition.

FIG. 2 depicts the results of this experiment shown as subcooling/°C. The farther the system is from forming hydrates, the better the performance of the composition. In FIG. 2, the darker portion of the horizontal line refers to <5 hydrate wt.-%/h and the lighter portion of the horizontal line refers to > or = to 5 hydrate wt.%/h.

The abbreviations in FIG. 2 are defined as follows:
KHI: 1-ethenylazepan-2-one - 1-ethenylpyrrolidin-2-one;
VX11823B: mixture of glycerol formal (about 61% by weight), 1-ethenylazepan-2-one - 1-ethenylpyrrolidin-2-one (1:1) (about 7% by weight), ethanol (about 31% by weight), and acetic acid (about 0.15% by weight);
VX11824B: mixture of glycerol formal (about 62% by weight), 1-ethenylazepan-2-one - 1-ethenylpyrrolidin-2-one (1:1) (about 6% by weight), ethanol (about 32% by weight), and acetic acid (about 0.15% by weight);
VX11824A: mixture of 1,2-ethanediyibis (oxy) bis methanol (about 86% by weight), 1-ethenylazepan-2-one - 1-ethenylpyrrolidin-2-one (1:1) (about 6% by weight), ethanol (about 8% by weight), and acetic acid (about 0.2% by weight);
VX11823A: mixture of 1,2-ethanediyibis (oxy) bis methanol (about 85% by weight), 1-ethenylazepan-2-one - 1-ethenylpyrrolidin-2-one (1:1) (about 7% by weight), ethanol (about 8% by weight), and acetic acid (about 0.2% by weight);
VX11825B: mixture of glycerol formal (about 63% by weight), 1-ethenylazepan-2-one - 1-ethenylpyrrolidin-2-one (1:1) (about 3% by weight), ethanol (about 33% by weight), and acetic acid (about 0.15% by weight);
VX11825A: mixture of 1,2-ethanediyibis (oxy) bis methanol (about 89% by weight), 1-ethenylazepan-2-one - 1-ethenylpyrrolidin-2-one (1:1) (about 3% by weight), ethanol (about 8% by weight), and acetic acid (about 0.2% by weight);
Scavenger A: a mixture of glycolformal (about 90% by weight) and ethanol (about 10% by weight); and
Scavenger B: a mixture of glycerolformal (about 70% by weight) and ethanol (about 30% by weight).

As can be seen from FIG. 2, a synergistic effect is shown between the components of the multifunctional compositions. For example, the kinetic hydrate inhibitor and the hydrogen sulfide scavengers are tested by themselves (as Scavenger B, Scavenger A, and KHI). All of the following rows show that the system has been brought even farther from the point of hydrate formation. As such, it can be said that the hydrogen sulfide scavenger has a synergistic effect on the hydrate inhibitor. Scavenger A presented a hydrate inhibition similar to that shown by the KHI but the scavenger also presented a slight hydrate formation inhibition capability, as seen in the graph, but the capability is increased when using the scavenger and the kinetic hydrate inhibitor together, as seen in the last 6 rows of FIG. 2, indicating a synergistic effect.

Additional experiments were carried out to detect the formation of gas hydrates, which are indicated by a pressure drop and often a corresponding increase in temperature. The decrease in pressure is a consequence of gas being incorporated into the hydrate crystal structure, which has increased density when compared to the gaseous state. The increase in temperature is observed because gas hydrate formation is an exothermic reaction. The tests were deemed to have passed if there was no indication of hydrate formation for the full duration of the tests, with the tests being conducted in duplicate, for a maximum of about 89 hours. As the inhibitor affects the kinetics of the system (i.e., it slows the rate of hydrate growth), hydrates may eventually form if the system was left at hydrate forming conditions for long enough. Data from the testing can be seen below in Table 2, which shows hydrate formation times.

**Table 2:**

| Product | H2S Scavenger | Target Pressure | Starting Temp (°C) | Temp (°C) | Average Autoclave Result (h) |
|---|---|---|---|---|---|
| Only KHI | NA | 60 bar | 25°C | 10°C | 52.2 |
| 1:9 | Glycerol formal | 60 bar | 25°C | 10°C | 71.0 |
| 1:1 | Glycerol formal | 60 bar | 25°C | 10°C | >89 |
| 1:1 | Glycol formal | 60 bar | 25°C | 10°C | 63.0 |
| 9.7:0.3 | Hexahydro-1,3,5- tris (2-hydroxyethyl)-S-Triazine | 60 bar | 25°C | 10°C | 71.4 |
| 1:1 | Glyoxal | 60 bar | 25°C | 10°C | 59.0 |
| 9.7:0.3 | Glyoxal | 60 bar | 25°C | 10°C | >89 |

In Table 2, the ratio of scavenger to inhibitor is shown in the first column. The scavengers are listed in the second column and the same KHI was used in all trials, i.e., 1-ethenylazepan-2-one-1-ethenylpyrrolidin-2-one. As can be seen from Table 2, the multifunctional compositions prohibit or extend the time needed for hydrates to form, which shows that there is a synergistic effect when using these hydrogen sulfide scavengers and hydrate inhibitor combinations.

Any ranges given either in absolute terms or in approximate terms are intended to encompass both, and any definitions used herein are intended to be clarifying and not limiting. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all subranges (including all fractional and whole values) subsumed therein.

Furthermore, the invention encompasses any and all possible combinations of some or all of the various embodiments described herein.

## Claims

1. A method of scavenging hydrogen sulfide and preventing the formation of hydrates in a medium comprising:
adding an effective amount of a multifunctional composition to the medium, wherein the multifunctional composition comprises a scavenger, a hydrate inhibitor, and optionally an acid, a base, and/or a solvent, wherein the scavenger comprises a member selected from the group consisting of 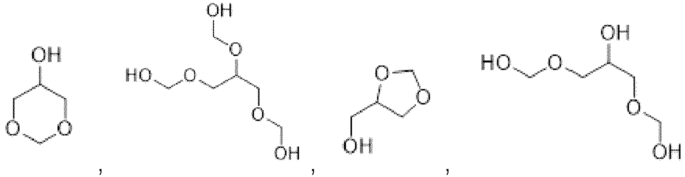 , and 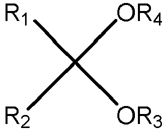 , wherein R₁ is hydrogen (H) or a hydrocarbon group with 1 to 5 carbon atoms, R₂ is H or a hydrocarbon group with 1 to 5 carbon atoms, R₃ is a hydrocarbon group with 1 to 5 carbon atoms, acetal, or a hemicetal, and R₄ is H or a hydrocarbon group with 1 to 5 carbon atoms,
ethylene glycol formaldehyde,
glycerol formal,
a cyclic compound comprising the following general formula: 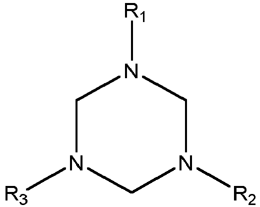
wherein R₁ may be selected from a hydrogen (H), a hydrocarbon group with 1 to 5 carbon atoms, or an alcohol group containing 1 or 2 carbon atoms; R₂ may be selected from hydrogen (H), a hydrocarbon group with 1 to 5 carbon atoms, or an alcohol group containing 1 or 2 carbon atoms, and; R₃ may be selected from hydrogen (H), a hydrocarbon group with 1 to 5 carbon atoms,
a dialdehyde,
and any combination thereof
and the hydrate inhibitor comprises a pyrrolidone or N-vinyl-2-caprolactam or poly-N-vinyl-2-caprolactam.

2. The method of claim 1, wherein the medium comprises gas, oil, water or any combination thereof and/or wherein an oil or gas well comprises the medium, and the multifunctional composition is added to the medium through a gas lift or an umbilical tubing.

3. The method of any one of claims 1 to 2, wherein the multifunctional composition is anhydrous and optionally excludes nitrogen-containing compounds and/or wherein the multifunctional composition comprises from 50% to 97%, by weight, of the scavenger, and from 50% to 3%, by weight, of the hydrate inhibitor.

4. The method of any one of claims 1 to 3, wherein the hydrate inhibitor comprises a structure selected from the group consisting of 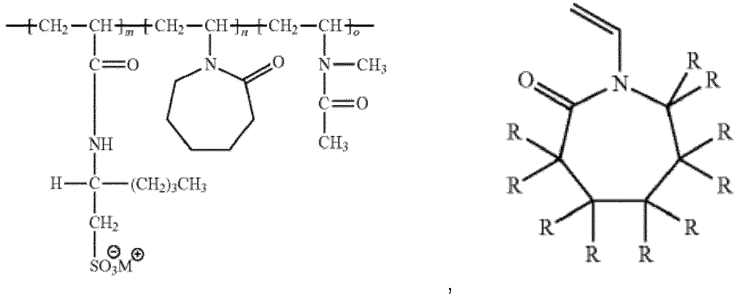 , and 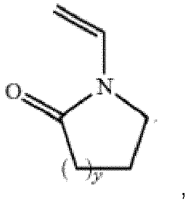
wherein R is independently selected from the group consisting of H, an alkyl group, a cycloalkyl group, and an aryl group;
m is a number from 1-60;
n is a number from 1-60;
M is a member selected from the group consisting of H, Na, K, Li, Ca, Ba, Mg2⁺, AI3⁺, and NH₄⁺; and
y is 1.

5. A multifunctional composition for scavenging hydrogen sulfide and preventing the formation of hydrates in a medium, comprising:
a hydrate inhibitor comprising a pyrrolidone or N-vinyl-2-caprolactam or poly-N-vinyl-2-caprolactam, and
a scavenger comprising a structure selected from the group consisting of: 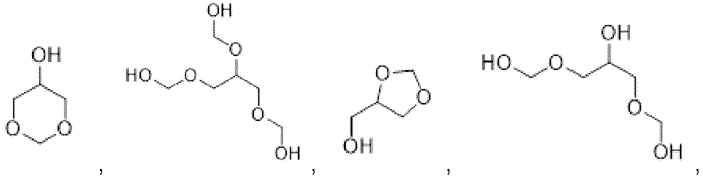 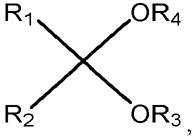 wherein R₁ is hydrogen (H) or a hydrocarbon group with 1 to 5 carbon atoms, R₂ is H or a hydrocarbon group with 1 to 5 carbon atoms, R₃ is a hydrocarbon group with 1 to 5 carbon atoms, acetal, or a hemiacetal, and R₄ is H or a hydrocarbon group with 1 to 5 carbon atoms,
ethylene glycol formaldehyde,
glycerol formal,
a cyclic compound comprising the following general formula: 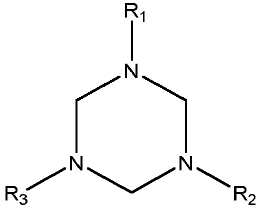
wherein R₁ may be selected from a hydrogen (H), a hydrocarbon group with 1 to 5 carbon atoms, or an alcohol group containing 1 or 2 carbon atoms; R₂ may be selected from hydrogen (H), a hydrocarbon group with 1 to 5 carbon atoms, or an alcohol group containing 1 or 2 carbon atoms, and; R₃ may be selected from hydrogen (H), a hydrocarbon group with 1 to 5 carbon atoms,
a dialdehyde,
and any combination thereof.

6. The composition of claim 5, wherein the scavenger comprises glycerol formal.

7. The composition of any one of claims 5 or 6, wherein the hydrate inhibitor comprises a structure selected from the group consisting of 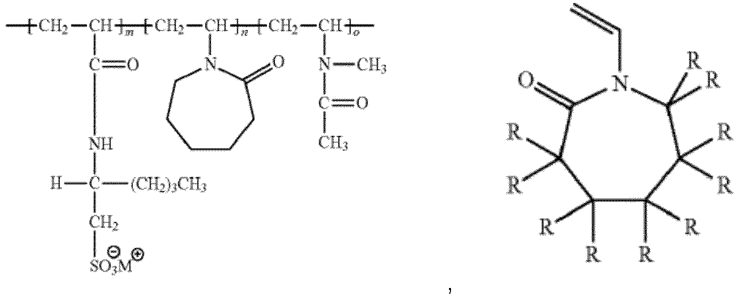 , and 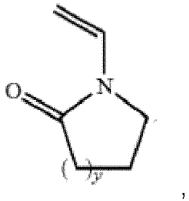
wherein R is independently selected from the group consisting of H, an alkyl group, a cycloalkyl group, and an aryl group;
m is a number from 1-60;
n is a number from 1-60;
M is a member selected from the group consisting of H, Na, K, Li, Ca, Ba, Mg2⁺,
AI3⁺, and NH₄⁺; and
y is 1.

8. The composition of any one of claims 5 to 7, wherein the multifunctional composition comprises 70%-98%, by weight, of the scavenger, wherein the scavenger comprises 1,2-ethanediylbis(oxy)bismethanol, 2%-8%, by weight, of the hydrate inhibitor, wherein the hydrate inhibitor comprises 1-ethenylazepan-2-one-1-ethenylpyrrolidin-2-one, 5%-10%, by weight, of the solvent, wherein the solvent comprises ethanol, and 0%-1%, by weight, of the acid, wherein the acid comprises acetic acid.

9. The composition of any one of claims 5 to 8, wherein the cyclic compound comprises the following general formula: 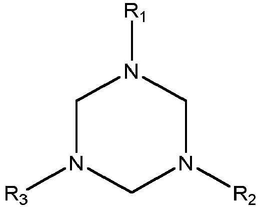 wherein R₁ may be selected from a hydrogen (H), a hydrocarbon group with 1 to 5 carbon atoms, or an alcohol group containing 1 or 2 carbon atoms; R₂ may be selected from hydrogen (H), a hydrocarbon group with 1 to 5 carbon atoms, or an alcohol group containing 1 or 2 carbon atoms, and; R₃ may be selected from hydrogen (H), a hydrocarbon group with 1 to 5 carbon atoms.

10. The composition of any one of claims 5 to 9, wherein one of:
the composition comprises the hydrate inhibitor and the scavenger; or
the composition comprises the hydrate inhibitor, the scavenger, and a solvent; or
the composition comprises the hydrate inhibitor, the scavenger, a solvent, and an acid.

11. Use of a multifunctional composition for scavenging hydrogen sulfide and preventing the formation of hydrates in a medium, the multifunctional composition comprising a scavenger, a hydrate inhibitor, and optionally an acid, a base, and/or a solvent, wherein the scavenger comprises a member selected from the group consisting of: 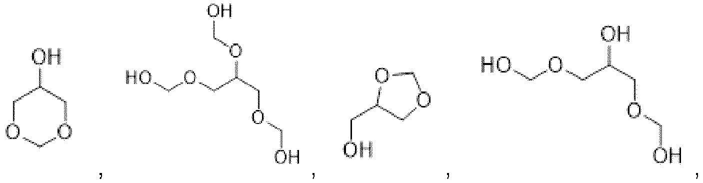 , and 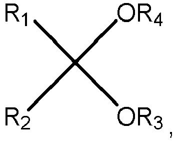 wherein R₁ is hydrogen (H) or a hydrocarbon group with 1 to 5 carbon atoms, R₂ is H or a hydrocarbon group with 1 to 5 carbon atoms, R₃ is a hydrocarbon group with 1 to 5 carbon atoms, acetal, or a hemicetal, and R₄ is H or a hydrocarbon group with 1 to 5 carbon atoms,
ethylene glycol formaldehyde,
glycerol formal,
a cyclic compound comprising the following general formula: 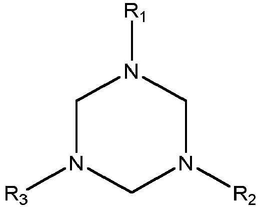
wherein R₁ may be selected from a hydrogen (H), a hydrocarbon group with 1 to 5 carbon atoms, or an alcohol group containing 1 or 2 carbon atoms; R₂ may be selected from hydrogen (H), a hydrocarbon group with 1 to 5 carbon atoms, or an alcohol group containing 1 or 2 carbon atoms, and; R₃ may be selected from hydrogen (H), a hydrocarbon group with 1 to 5 carbon atoms,
a dialdehyde,
and any combination thereof
and the hydrate inhibitor comprises a pyrrolidone or N-vinyl-2-caprolactam or poly-N-vinyl-2-caprolactam.

## Patentansprüche

1. Verfahren zum Abfangen von Schwefelwasserstoff und zum Verhindern der Ausbildung von Hydraten in einem Medium, umfassend:
Hinzufügen einer wirksamen Menge einer multifunktionellen Zusammensetzung zu dem Medium, wobei die multifunktionelle Zusammensetzung einen Scavenger, einen Hydratinhibitor und optional eine Säure, eine Base und/oder ein Lösungsmittel umfasst, wobei der Scavenger ein Element umfasst, das ausgewählt ist aus der Gruppe, bestehend aus 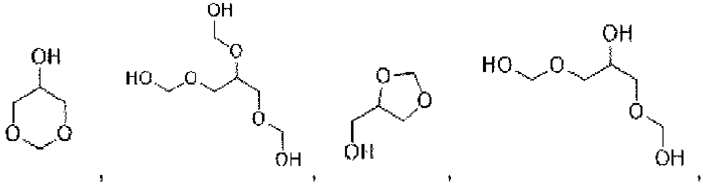 , und 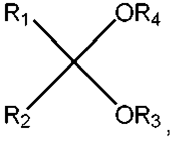 wobei R₁ Wasserstoff (H) oder eine Kohlenwasserstoffgruppe mit 1 bis 5 Kohlenstoffatomen ist, R₂ H oder eine Kohlenwasserstoffgruppe mit 1 bis 5 Kohlenstoffatomen ist, R₃ eine Kohlenwasserstoffgruppe mit 1 bis 5 Kohlenstoffatomen, ein Acetal, oder ein Halbacetal ist, und R₄ H oder eine Kohlenwasserstoffgruppe mit 1 bis 5 Kohlenstoffatomen ist,
Ethylenglykol-Formaldehyd,
Glycerinformal,
eine zyklische Verbindung, umfassend die folgende allgemeine Formel: 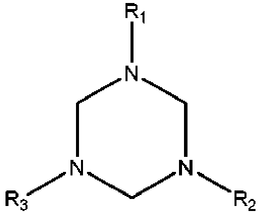
wobei R₁ aus einem Wasserstoff (H), einer Kohlenwasserstoffgruppe mit 1 bis 5 Kohlenstoffatomen, oder einer Alkoholgruppe, die 1 oder 2 Kohlenstoffatome enthält, ausgewählt sein kann; R₂ aus Wasserstoff (H), einer Kohlenwasserstoffgruppe mit 1 bis 5 Kohlenstoffatomen oder einer Alkoholgruppe, die 1 oder 2 Kohlenstoffatome enthält, ausgewählt sein kann, und; R₃ aus Wasserstoff (H), einer Kohlenwasserstoffgruppe mit 1 bis 5 Kohlenstoffatomen ausgewählt sein kann,
ein Dialdehyd,
und eine beliebige Kombination davon
und der Hydratinhibitor ein Pyrrolidon oder N-Vinyl-2-Caprolactam oder Poly-N-Vinyl-2-Caprolactam umfasst.

2. Verfahren nach Anspruch 1, wobei das Medium Gas, ÖI, Wasser oder eine beliebige Kombination davon umfasst und/oder wobei ein ÖI- oder Gasbohrloch das Medium umfasst und die multifunktionelle Zusammensetzung dem Medium durch einen Gaslift oder eine Umbilical-Leitung hinzugefügt wird.

3. Verfahren nach einem der Ansprüche 1 bis 2, wobei die multifunktionelle Zusammensetzung wasserfrei ist und optional Stickstoff-enthaltende Verbindungen ausschließt und/oder wobei die multifunktionelle Zusammensetzung von 50 Gew.-% bis 97 Gew.-% des Scavengers und von 50 Gew.-% bis 3 Gew.-% des Hydratinhibitors umfasst.

4. Verfahren nach einem der Ansprüche 1 bis 3, wobei der Hydratinhibitor eine Struktur umfasst, die ausgewählt ist aus der Gruppe, bestehend aus 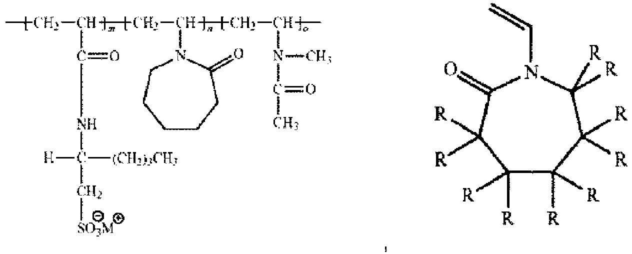 , und 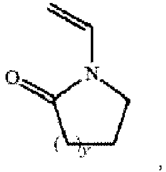
wobei R unabhängig ausgewählt ist aus der Gruppe bestehend aus H, einer Alkylgruppe, einer Cycloalkylgruppe und einer Arylgruppe;
m eine Zahl von 1-60 ist;
n eine Zahl von 1-60 ist;
M ein Element ist, das ausgewählt ist aus der Gruppe bestehend aus H, Na, K, Li, Ca, Ba, Mg2⁺, AI3⁺, und NH₄⁺; und
y 1 ist.

5. Multifunktionelle Zusammensetzung zum Abfangen von Schwefelwasserstoff und zum Verhindern der Ausbildung von Hydraten in einem Medium, umfassend:
einen Hydratinhibitor, umfassend ein Pyrrolidon oder N-Vinyl-2-Caprolactam oder Poly-N-Vinyl-2-Caprolactam, und
einen Scavenger, umfassend eine Struktur, die ausgewählt ist aus der Gruppe bestehend aus: 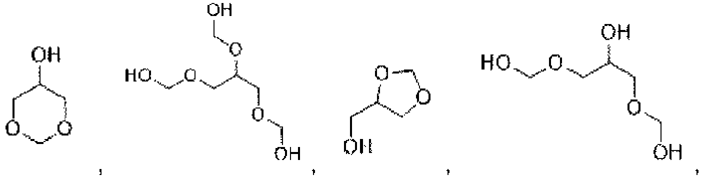 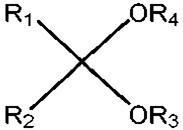 , wobei R₁ Wasserstoff (H) oder eine Kohlenwasserstoffgruppe mit 1 bis 5 Kohlenstoffatomen ist, R₂ H oder eine Kohlenwasserstoffgruppe mit 1 bis 5 Kohlenstoffatomen ist, R₃ eine Kohlenwasserstoffgruppe mit 1 bis 5 Kohlenstoffatomen, ein Acetal, oder ein Halbacetal ist, und R₄ H oder eine Kohlenwasserstoffgruppe mit 1 bis 5 Kohlenstoffatomen ist,
Ethylenglykol-Formaldehyd,
Glycerinformal,
eine zyklische Verbindung, umfassend die folgende allgemeine Formel: 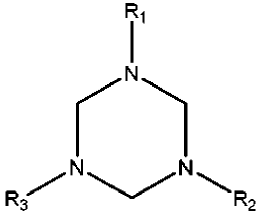
wobei R₁ aus einem Wasserstoff (H), einer Kohlenwasserstoffgruppe mit 1 bis 5 Kohlenstoffatomen, oder einer Alkoholgruppe, die 1 oder 2 Kohlenstoffatome enthält, ausgewählt sein kann; R₂ aus Wasserstoff (H), einer Kohlenwasserstoffgruppe mit 1 bis 5 Kohlenstoffatomen oder einer Alkoholgruppe, die 1 oder 2 Kohlenstoffatome enthält, ausgewählt sein kann, und; R₃ aus Wasserstoff (H), einer Kohlenwasserstoffgruppe mit 1 bis 5 Kohlenstoffatomen ausgewählt sein kann,
ein Dialdehyd,
und eine beliebige Kombination davon.

6. Zusammensetzung nach Anspruch 5, wobei der Scavenger Glycerinformal umfasst.

7. Zusammensetzung nach einem der Ansprüche 5 oder 6, wobei der Hydratinhibitor eine Struktur umfasst, die ausgewählt ist aus der Gruppe, bestehend aus 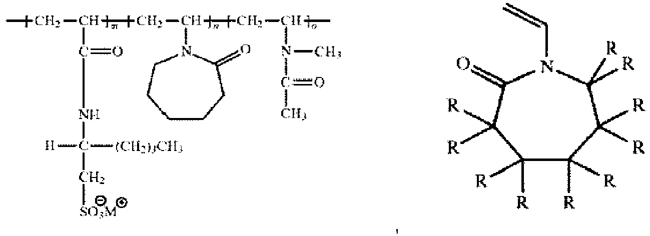 ' und 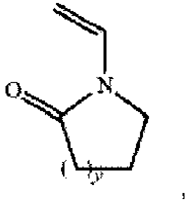
wobei R unabhängig ausgewählt ist aus der Gruppe bestehend aus H, einer Alkylgruppe, einer Cycloalkylgruppe und einer Arylgruppe;
m eine Zahl von 1-60 ist;
n eine Zahl von 1-60 ist;
M ein Element ist, das ausgewählt ist aus der Gruppe bestehend aus H, Na, K, Li, Ca, Ba, Mg2⁺, AI3⁺, und NH₄⁺; und
y 1 ist.

8. Zusammensetzung nach einem der Ansprüche 5 bis 7, wobei die multifunktionelle Zusammensetzung 70 Gew.-%-98 Gew.-% des Scavengers umfasst, wobei der Scavenger 2 Gew.-%-8 Gew.-% 1,2-Ethandiylbis(oxy)bismethanol des Hydratinhibitors umfasst, wobei der Hydratinhibitor 5 Gew.-%-10 Gew.-% 1-Ethenylazepan-2-on-1-ethenylpyrrolidin-2-on des Lösungsmittels umfasst, wobei das Lösungsmittel Ethanol und 0 Gew.-%-1 Gew.-% der Säure umfasst, wobei die Säure Essigsäure umfasst.

9. Zusammensetzung nach einem der Ansprüche 5 bis 8, wobei die zyklische Verbindung die folgende allgemeine Formel umfasst: 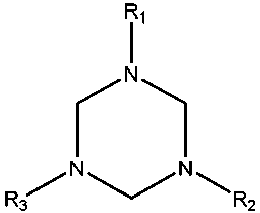 wobei R₁ aus einem Wasserstoff (H), einer Kohlenwasserstoffgruppe mit 1 bis 5 Kohlenstoffatomen, oder einer Alkoholgruppe, die 1 oder 2 Kohlenstoffatome enthält, ausgewählt sein kann; R₂ aus Wasserstoff (H), einer Kohlenwasserstoffgruppe mit 1 bis 5 Kohlenstoffatomen oder einer Alkoholgruppe, die 1 oder 2 Kohlenstoffatome enthält, ausgewählt sein kann, und; R₃ aus Wasserstoff (H), einer Kohlenwasserstoffgruppe mit 1 bis 5 Kohlenstoffatomen ausgewählt sein kann.

10. Zusammensetzung nach einem der Ansprüche 5 bis 9, wobei:
die Zusammensetzung den Hydratinhibitor und den Scavenger umfasst; oder
die Zusammensetzung den Hydratinhibitor, den Scavenger und ein Lösungsmittel umfasst; oder
die Zusammensetzung den Hydratinhibitor, den Scavenger, ein Lösungsmittel und eine Säure umfasst.

11. Verwendung einer multifunktionellen Zusammensetzung zum Abfangen von Schwefelwasserstoff und zum Verhindern der Ausbildung von Hydraten in einem Medium, wobei die multifunktionelle Zusammensetzung einen Scavenger, einen Hydratinhibitor und optional eine Säure, eine Base, und/oder ein Lösungsmittel umfasst, wobei der Scavenger ein Element umfasst, das ausgewählt ist, aus der Gruppe bestehend aus: 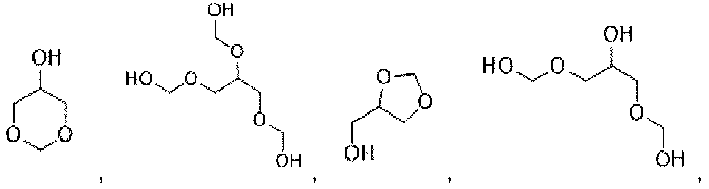 und wobei R₁ Wasserstoff (H) oder eine Kohlenwasserstoffgruppe mit 1 bis 5 Kohlenstoffatomen ist, R₂ H oder eine Kohlenwasserstoffgruppe mit 1 bis 5 Kohlenstoffatomen ist, R₃ eine Kohlenwasserstoffgruppe mit 1 bis 5 Kohlenstoffatomen, ein Acetal, oder ein Halbacetal ist, und R₄ H oder eine Kohlenwasserstoffgruppe mit 1 bis 5 Kohlenstoffatomen ist,
Ethylenglykol-Formaldehyd,
Glycerinformal,
eine zyklische Verbindung, umfassend die folgende allgemeine Formel: 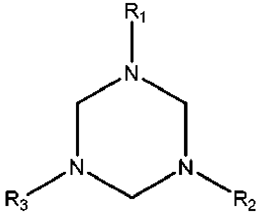
wobei R₁ aus einem Wasserstoff (H), einer Kohlenwasserstoffgruppe mit 1 bis 5 Kohlenstoffatomen, oder einer Alkoholgruppe, die 1 oder 2 Kohlenstoffatome enthält, ausgewählt sein kann; R₂ aus Wasserstoff (H), einer Kohlenwasserstoffgruppe mit 1 bis 5 Kohlenstoffatomen oder einer Alkoholgruppe, die 1 oder 2 Kohlenstoffatome enthält, ausgewählt sein kann, und; R₃ aus Wasserstoff (H), einer Kohlenwasserstoffgruppe mit 1 bis 5 Kohlenstoffatomen ausgewählt sein kann,
ein Dialdehyd,
und eine beliebige Kombination davon
und der Hydratinhibitor ein Pyrrolidon oder N-Vinyl-2-Caprolactam oder Poly-N-Vinyl-2-Caprolactam umfasst.

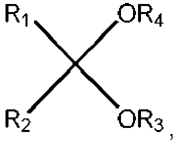

## Revendications

1. Procédé servant à piéger le sulfure d'hydrogène et à éviter la formation d'hydrates dans un milieu, comprenant :
l'ajout d'une quantité efficace d'une composition multifonctionnelle au milieu, la composition multifonctionnelle comprenant un piégeur, un inhibiteur d'hydrate et éventuellement un acide, une base et/ou un solvant, le piégeur comprenant un élément choisi dans le groupe constitué de 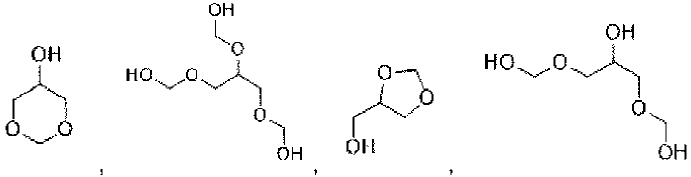 'et 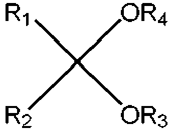 ' où R₁ est un hydrogène (H) ou un groupe hydrocarbure avec 1 à 5 atomes de carbone, R₂ est H ou un groupe hydrocarbure avec 1 à 5 atomes de carbone, R₃ est un groupe hydrocarbure avec 1 à 5 atomes de carbone, un acétal, ou un hémicétal, et R₄ est H ou un groupe hydrocarbure avec 1 à 5 atomes de carbone,
un éthylène glycol formaldéhyde,
un formal de glycérol,
un composé cyclique comprenant la formule générale suivante : 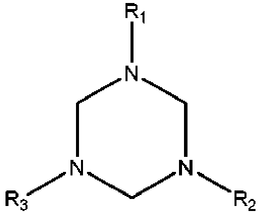
où R₁ peut être choisi parmi un hydrogène (H), un groupe hydrocarbure avec 1 à 5 atomes de carbone, ou un groupe alcool contenant 1 ou 2 atomes de carbone ; R₂ peut être choisi parmi un hydrogène (H), un groupe hydrocarbure avec 1 à 5 atomes de carbone, ou un groupe alcool contenant 1 ou 2 atomes de carbone, et ; R₃ peut être choisi parmi un hydrogène (H), un groupe hydrocarbure de 1 à 5 atomes de carbone,
un dialdéhyde,
et toute combinaison de ceux-ci
et l'inhibiteur d'hydrate comprend une pyrrolidone ou un N-vinyl-2-caprolactame ou un poly-N-vinyl-2-caprolactame.

2. Procédé selon la revendication 1, dans lequel le milieu comprend du gaz, du pétrole, de l'eau ou toute combinaison de ceux-ci et/ou dans lequel un puits de pétrole ou de gaz comprend le milieu, et la composition multifonctionnelle est ajoutée au milieu par un élévateur à gaz ou un conduit ombilical.

3. Procédé selon l'une quelconque des revendications 1 à 2, dans lequel la composition multifonctionnelle est anhydre et exclut éventuellement les composés contenant de l'azote et/ou dans lequel la composition multifonctionnelle comprend de 50 % à 97 % en poids du piégeur, et de 50 % à 3 % en poids de l'inhibiteur d'hydrate.

4. Procédé selon l'une quelconque des revendications 1 à 3, dans lequel l'inhibiteur d'hydrate comprend une structure choisie dans le groupe constitué de 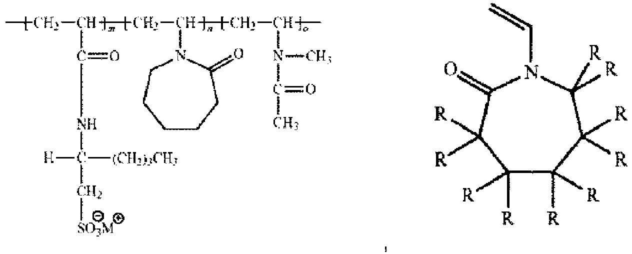 , et 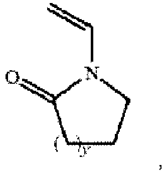
où R est indépendamment choisi dans le groupe constitué de H, un groupe alkyle, un groupe cycloalkyle et un groupe aryle ;
m est un nombre compris entre 1 et 60 ;
n est un nombre compris entre 1 et 60 ;
M est un élément choisi dans le groupe constitué de H, Na, K, Li, Ca, Ba, Mg2⁺, Al3⁺ et NH₄⁺; et
y vaut 1.

5. Composition multifonctionnelle servant à piéger le sulfure d'hydrogène et à éviter la formation d'hydrates dans un milieu, comprenant :
un inhibiteur d'hydrate comprenant une pyrrolidone ou un N-vinyl-2-caprolactame ou un poly-N-vinyl-2-caprolactame, et
un piégeur comprenant une structure choisie dans le groupe constitué de : 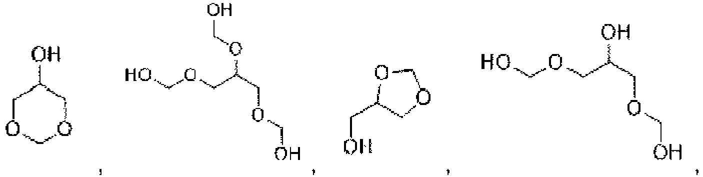 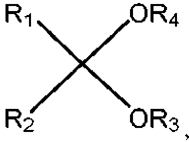 où R₁ est un hydrogène (H) ou un groupe hydrocarbure avec 1 à 5 atomes de carbone, R₂ est H ou un groupe hydrocarbure avec 1 à 5 atomes de carbone, R₃ est un groupe hydrocarbure avec 1 à 5 atomes de carbone, un acétal, ou un hémiacétal, et R₄ est H ou un groupe hydrocarbure avec 1 à 5 atomes de carbone,
un éthylène glycol formaldéhyde,
un formal de glycérol,
un composé cyclique comprenant la formule générale suivante : 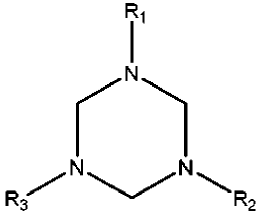
où R₁ peut être choisi parmi un hydrogène (H), un groupe hydrocarbure avec 1 à 5 atomes de carbone, ou un groupe alcool contenant 1 ou 2 atomes de carbone ; R₂ peut être choisi parmi un hydrogène (H), un groupe hydrocarbure avec 1 à 5 atomes de carbone, ou un groupe alcool contenant 1 ou 2 atomes de carbone, et ; R₃ peut être choisi parmi un hydrogène (H), un groupe hydrocarbure de 1 à 5 atomes de carbone,
un dialdéhyde,
et toute combinaison de ceux-ci.

6. Composition selon la revendication 5, dans laquelle le piégeur comprend du formal de glycérol.

7. Composition selon l'une quelconque des revendications 5 ou 6, dans laquelle l'inhibiteur d'hydrate comprend une structure choisie dans le groupe constitué de 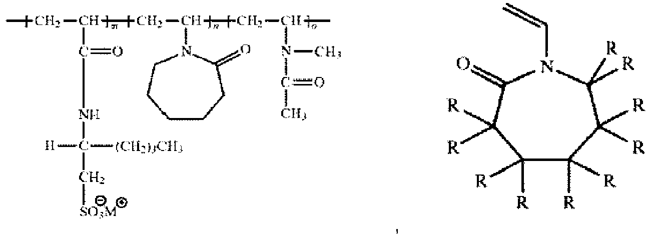 ' et 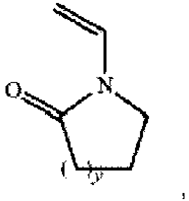
où R est indépendamment choisi dans le groupe constitué de H, un groupe alkyle, un groupe cycloalkyle et un groupe aryle ;
m est un nombre compris entre 1 et 60 ;
n est un nombre compris entre 1 et 60 ;
M est un élément choisi dans le groupe constitué de H, Na, K, Li, Ca, Ba, Mg2⁺, Al3⁺ et NH₄⁺ ; et
y vaut 1.

8. Composition selon l'une quelconque des revendications 5 à 7, dans laquelle la composition multifonctionnelle comprend 70 % à 98 % en poids du piégeur, dans laquelle le piégeur comprend un 1,2-éthanediylbis(oxy)bisméthanol, 2 % à 8 % en poids d'un inhibiteur d'hydrate, où l'inhibiteur d'hydrate comprend un 1-éthénylazépan-2-one-1-éthénylpyrrolidin-2-one, 5 % à 10 % en poids du solvant, où le solvant comprend de l'éthanol, et 0 % à 1 % en poids de l'acide, l'acide comprenant de l'acide acétique.

9. Composition selon l'une quelconque des revendications 5 à 8, dans laquelle le composé cyclique comprend la formule générale suivante : 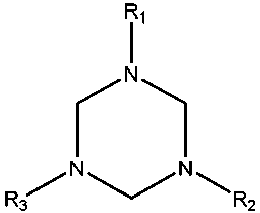 où R₁ peut être choisi parmi un hydrogène (H), un groupe hydrocarbure avec 1 à 5 atomes de carbone, ou un groupe alcool contenant 1 ou 2 atomes de carbone ; R₂ peut être choisi parmi un hydrogène (H), un groupe hydrocarbure avec 1 à 5 atomes de carbone, ou un groupe alcool contenant 1 ou 2 atomes de carbone, et ; R₃ peut être choisi parmi un hydrogène (H), un groupe hydrocarbure ayant de 1 à 5 atomes de carbone.

10. Composition selon l'une quelconque des revendications 5 à 9, dans laquelle :
la composition comprend l'inhibiteur d'hydrate et le piégeur ; ou
la composition comprend l'inhibiteur d'hydrate, le piégeur et un solvant ; ou
la composition comprend l'inhibiteur d'hydrate, le piégeur, un solvant et un acide.

11. Utilisation d'une composition multifonctionnelle servant à piéger le sulfure d'hydrogène et à éviter la formation d'hydrates dans un milieu, la composition multifonctionnelle comprenant un piégeur, un inhibiteur d'hydrate et éventuellement un acide, une base et/ou un solvant, dans laquelle le piégeur comprend un élément choisi parmi le groupe constitué de : 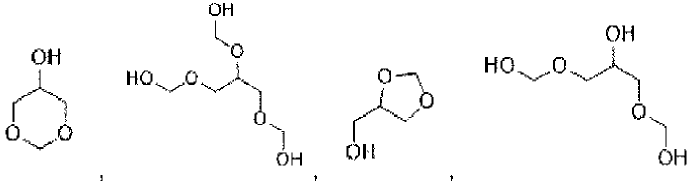 ' et 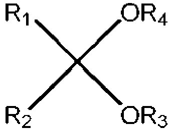 , où R₁ est un hydrogène (H) ou un groupe hydrocarbure avec 1 à 5 atomes de carbone, R₂ est H ou un groupe hydrocarbure avec 1 à 5 atomes de carbone, R₃ est un groupe hydrocarbure avec 1 à 5 atomes de carbone, un acétal, ou un hémicétai, et R₄ est H ou un groupe hydrocarbure avec 1 à 5 atomes de carbone,
un éthylène glycol formaldéhyde,
un formal de glycérol,
un composé cyclique comprenant la formule générale suivante : 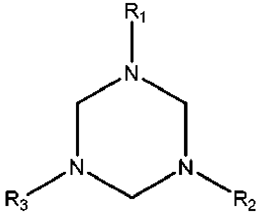
où R₁ peut être choisi parmi un hydrogène (H), un groupe hydrocarbure avec 1 à 5 atomes de carbone, ou un groupe alcool contenant 1 ou 2 atomes de carbone ; R₂ peut être choisi parmi un hydrogène (H), un groupe hydrocarbure avec 1 à 5 atomes de carbone, ou un groupe alcool contenant 1 ou 2 atomes de carbone, et ; R₃ peut être choisi parmi un hydrogène (H), un groupe hydrocarbure de 1 à 5 atomes de carbone,
un dialdéhyde,
et toute combinaison de ceux-ci
et l'inhibiteur d'hydrate comprend une pyrrolidone ou un N-vinyl-2-caprolactame ou un poly-N-vinyl-2-caprolactame.
